Europäisches Patentamt

European Patent Office

Office européen des brevets

(11) Publication number: **0 120 498**
**B1**

(12) **EUROPEAN PATENT SPECIFICATION**

(45) Date of publication of patent specification: **16.05.90**

(51) Int. Cl.⁵: **A 23 C 20/00**

(21) Application number: **84103388.9**

(22) Date of filing: **27.03.84**

(54) **Imitation cheese products containing high amylose starches as partial or total replacements for the caseinates.**

(30) Priority: **29.03.83 US 480058**

(43) Date of publication of application:
**03.10.84 Bulletin 84/40**

(45) Publication of the grant of the patent:
**16.05.90 Bulletin 90/20**

(84) Designated Contracting States:
**BE CH DE FR GB IT LI LU NL SE**

(56) References cited:
**GB-A-2 032 241**
**US-A-3 443 964**
**US-A-3 836 677**
**US-A-3 969 340**
**US-A-4 104 413**
**US-A-4 232 050**

**DIE STÄRKE, vol. 26, no. 5, May 1974, pages
145-153; G. GRAEFE: "Modifizierte Stärken als
Bestandteile von Lebensmitteln"**

(73) Proprietor: **National Starch and Chemical
Corporation
Box 6500
Bridgewater, N.J. 08807 (US)**

(72) Inventor: **Zwiercan, Gary A.
10 Yewland Drive
Knutsford Cheshire WA168AP (GB)**
Inventor: **Lacourse, Norman L.
57-02 Hunters Glen Drive
Plainsboro New Jersey 08536 (US)**
Inventor: **Lenchin, Julianne M.
2433 Old Stone Mill Drive
Cranbury New Jersey 08512 (US)**

(74) Representative: **Hagemann, Heinrich, Dr. Dipl.-
Chem. et al
Patentanwälte HAGEMANN & KEHL Ismaninger
Strasse 108 Postfach 860329
D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 120 498 B1

## Description

This invention relates imitation cheese products, such as cheddar, processed American and especially mozzarella, wherein the caseinates are partially or totally replaced by pregelatinized high amylose starches.

Early attempts to reduce cheese costs led to the development of cheese analogs in which vegetable fat replaced the more costly milk fat. Such analogs were usually manufactured by traditional methods from skim milk containing dispersed vegetable fats and were generally referred to as "filled" cheeses.

Later economic incentives and technical advances led to the development of cheese analogs manufactured fundamentally from casein or its derivatives, vegetable fats or oils, salts, acids, and flavorings. Since casein derivatives are legally defined as nondairy ingredients, the analogs were referred to as "imitation" cheeses.

Imitation cheese products include very high-moisture content cheeses such as cream cheese; high-moisture content cheeses such as blue cheese and mozzarella, the latter accounting for a major portion of the casein-based imitation cheese market; medium-moisture cheeses, such as cheddar and provolone; low-moisture cheeses, such as romano and parmesan; and pasteurized processed cheeses such as American cheese, cheese spreads and cheese products. These imitation cheese products provide the flavor and functionality of natural cheese at a reduced cost and, in addition, are lower both in calories and cholesterol since the animal fat has been replaced by vegetable fat.

Sodium, potassium, and calcium caseinates, as well as those salts generated *in situ* by treating acid casein and rennet casein with the appropriate alkali, are used in the preparation of imitation cheese products. Besides providing a major protein source, the caseinates, alone or in combination, possess unique setting, textural and emulsification properties that make them ideal, and their moderately low viscosity permits their use at high solids.

The current high cost and uncertain future availability of casein and caseinates have become a major concern to food processors. For these reasons, the processors have been trying to find a readily available caseinate substitute, preferably a low cost substitute, to partially or totally replace the caseinates in imitation cheese products. Some attempts have been made to utilize dry vegetable protein isolates (e.g. soy isolates) as replacements. The isolates lack the functionality of the caseinates and have only been useful as extenders. The isolates have to be specially treated to provide cheeses with sufficient melt (see US—A—4,349,576) and even then severe shearing during the cheese preparation will substantially reduce the melt value. A recent article in Food Processing (October 1981, pp. 28—29) discloses that a protein mixture (25% casein, 25% soy flour, 25% wheat gluten, and 25% alfalfa protein) is being used with some success in imitation mozzarella cheese; however, the final product does not provide "all desirable characteristics, including flavor".

Thus, there is still a need for a readily available caseinate replacement which will provide the gelling or gelling and emulsion-stabilizing properties required during the cheese preparation and which will still provide cheese products having a desirable flavor and textural properties (i.e. especially gel, melt, and shredding and slicing characteristics) comparable to the caseinate-based imitation cheeses.

Flours and starches have been used in various cheese products as thickeners and/or binders as well as to improve specific properties. They have not, however, been used as caseinate replacements to provide the properties typically supplied by the caseinates.

In natural cheese products, for example, cyclodextrin has been added to increase moisture retention and storage life (Jap. Kokai Tokyo Koho 81 75,060); phosphorylated starch has been used as a thickener in blends of Cheshire and Emmenthal cheese to provide a non-stringy product (Fr. 1,570,860); aqueous corn starch mixtures (in place of the previously used milk or butter) have been blended with melted ripe cheese to give a stable soft food product having the consistency of butter (FR 1,566,665); starches have been used in processed cheese products prepared from natural cheese, milk powder and other ingredients (Food Engineering, November 1980, p. 25); and pregelatinized corn, potato and tapioca starches have been used as stabilizers (against the deleterious influences of freezing and thawing) in cheese cake and cheese pie fillings (US—A—3,666,493). In addition, potato starch (3—6%) has been used in admixture with a whey solution as a coating (heated to about 65°C) to improve the general appearance of hard cheeses (PL 54,548).

In cheese analogs and simulated cheese products, for example, corn starch hydrolysates (e.g. corn syrup) have been used as binders to bind the water and prevent or retard its loss, as well as to add gloss, palatability, and body texture, to cheese foods based on vegetable oils, animal or vegetable proteins, and emulsifying metal salts (US—A—3,310,406); ungelatinized flours (e.g. 3% tapioca flour) have been added as optional ingredients (0—5%) to a caseinate-containing cheese substitute to aid in the firmness of the cheese substitutes resembling pasta filata or cheddar cheese (AT—A—335,830; DE—A—2,411,945; US—A—3,922,374; and US—A—4,104,413); flour has been used as the matrix in intermediate moisture (about 12%), high flavor-impact cheese analogs containing dehydrated cheese and artificial flavorings (Food Product Development, June 1980, pp. 42—43); gelatinized high amylose starches and their derivatives have been used as binders for various edible protein pieces in integral simulated cheese products containing no fat (US—A—3,836,677); pregelatinized starches (e.g. corn, wheat, waxy maize and tapioca) have been used in shelf-stable, high protein extruded cheese products prepared from a mixture of cheese, starch, high protein binding agent, water, sugar or sugar equivalents and optionally 1—7% of an edible oil (US—A—3,741,774); and starch (preferably corn starch) has been used with glucono-δ-lactone as

2

a coagulant in fresh cheese-like products prepared by heating a thermally coagulable protein (whey protein, liquid albumen, liquid whole egg, albumen powder, or whole egg powder) and whole and/or skimmed milk (see US—A—4,369,196).

Thus, there is a need for starches for use as partial or total caseinate replacements in imitation cheeses, especially mozzarella cheese.

It provides an imitation cheese product comprising water, an edible vegetable fat or vegetable oil, and cheese additives and characterized in that 20 to 100% by weight of the caseinate typically present in the product is replaced by an edible pregelatinized high amylose starch having an amylose content of at least 40% by weight, the derivatives thereof, the converted products thereof, the converted derivatized products thereof, the crosslinked products thereof; the high amylose starch derivatives being prepared by treatment with up to about 25% propylene oxide, up to about 5% succinic anhydride, up to about 10% octenylsuccinic anhydride, or with a sufficient amount of acetic anhydride to provide a maximum of about 6% bound acetyl, or with a sufficient amount of sodium or potassium orthophosphate, sodium or potassium tripolyphosphate, or mixtures thereof to provide a maximum of about 0.8% bound phosphate, calculated as phosphorus; the high amylose converted starch products being selected from the group consisting of fluidity starches prepared by acid- or enzyme-conversion, oxidized starches prepared by treatment with less than 5.5% active chlorine, and dextrins having a calcium chloride water fluidity of less than about 50; the treatment percentages being by weight based on the starch.

In a preferred embodiment, it provides an imitation cheese product substantially equivalent to a caseinate-based imitation cheese product selected from the group consisting of mozzarella cheese, cheddar cheese, and processed American cheese, which comprises water, an edible vegetable fat or vegetable oil, cheese additives, and a gelling mixture of 20—80% by weight of sodium and/or calcium caseinate and 80—20% by weight of a pregelatinized high amylose corn starch selected from the group consisting of acid-converted starches having a calcium chloride water fluidity of 40 or less, derivatized starches prepared by treatment with 3—6% octenylsuccinic anhydride, and converted derivatized starches having the above water fluidity and prepared by treatment 1—3% octenylsuccinic anhydride, the high amylose starches having amylose contents of 50—70% by weight, and mixtures of the pregelatinized high amylose starch with other pregelatinized starches (e.g. a fluidity amioca starch), the mixture containing 30—70% by weight of the high amylose starch.

In another embodiment, it provides a caseinate-free imitation cheese product functionally equivalent to a caseinate-based imitation mozzarella cheese product, which comprises water, an edible vegetable fat or oil, cheese additives, and a gelling amount of a pregelatinized high amylose corn starch selected from the group consisting of acid-converted starches having a calcium chloride water fluidity of 30—32 and the derivative thereof having the above water fluidity which are prepared by treatment with up to 0.75% octenylsuccinic anhydride, the high amylose starches having amylose contents of 50—70% by weight.

A possible method for preparing an imitation cheese product from water, a melted vegetable fat or a vegetable oil, and cheese additives is characterized in that one of the edible high amylose starches or starch mixtures discussed hereinabove is added alone or together with an edible caseinate, the starches, starch mixtures, or starch-caseinate mixtures gelling or gelling and emulsion-stabilizing the water and melted fat or oil to form the cheese product.

As used herein, the term "imitation cheese" is intended to refer to any cheese analog typically prepared from water, vegetable fats or vegetable oils, the starches described herein, typical cheese additives such as natural and/or artificial flavorings, salts (sodium chloride and other salts), acids, colors, emulsifiers, stabilizers and preservatives, and optionally the edible caseinates typically present in the cheeses and/or vegetable proteins.

As used herein, suitable high amylose starches include starches such as high amylose corn starches having amylose contents of 40—80%, wrinkled pea starches having amylose contents of 75—98%, and 100% amylose such as that extracted from potato starch. Other starches suitable for use in combination with the high amylose starches, provided the mixtures contain at least 20%, preferably 30—70%, by weight of the high amylose starch, include starches such as corn, potato, sweet potato, wheat, rice, sago, tapioca, sorghum or the like having amylose contents of up to about 30%, starches such as smooth pea, Canadian pea, cocoa bean, winged bean, or the like having amylose contents of up to about 40%, and starches such as waxy maize or waxy or gelatinous rice having amylose contents of from 0—6%.

All of the starches, including the derivatized, converted, converted derivatized, and crosslinked products thereof, must be pregelatinized to be useful herein and to form a final cheese product having the desired textural properties. Pregelatinized starches are swellable in cold water without cooking. The starches may be pregelatinized by cooking the starch slurries (as in the Votator, tradename of Chemetron Corp. for a steam heated cooker) and then drum-drying or by jet-cooking the slurries and then spray-drying. The starches having an amylose content below 40% may be pregelatinized by drum-drying without prior cooking; the high amylose starches (40% or above) require cooking prior to drum-drying to fully cook the starch. The cooked starch can be dried by means other than spray-drying (i.e., freeze-drying, alcohol precipitation, rotary evaporation). Other means of carrying out the pregelatinization, such as extrusion, may also be useful herein. The jet-cooked starch dispersion, if desired, can be added directly to the cheese formulation.

Drum-drying is a conventional process for simultaneously cooking and drying starch slurries on heated drums and is described in such articles as Chapter XXII — "Production and Use of Pregelatinized Starch", Starch: Chemistry and Technology, Vol. II — Industrial Aspects, R. L. Whistler and E. F. Paschall, Editors, Academic Press, New York 1967. Drum-dried starches are in the form of thin, solid sheets which are pulverized prior to use in the cheese formulation.

Jet-cooking and spray-drying are conventional and described in patents such as US—A—3,674,555. A starch slurry is pumped into a heated cooking chamber where pressurized steam is injected into the starch slurry. The cooked starch solution passes from the cooking chamber and exits via an exit pipe. The starch solution is atomized by pressurized spray nozzles or centrifugal wheel atomizers into a large, heated chamber where the water is evaporated. The starch passes through a cyclone to separate the heated air from the starch powder. The steam-injection, direct spray-drying process and apparatus described in US—A—4,280,851 for gelatinizing starch materials, especially high viscosity materials, in the atomized state is also useful herein.

Converted high-amylose corn starches are preferred for use in the total replacement cheese products. Conversion degrades the starch and reduces the viscosity of the cooked starch dispersions. It also improves the melt of the final cheese product. Suitable converted starches include acid- or enzyme-converted starches (often referred to as fluidity starches), oxidized starches (often referred to as chlorinated starches because of the reagent used in their preparation although no chlorine is chemically bound to the starch), and selected dextrins.

Dextrins, both high amylose and other dextrins, are suitable for use herein provided they are only mildly converted (i.e. have the indicated calcium chloride water fluidity or ABF value). Moderately and highly converted high amylose dextrins do not provide the required gel strength. Other dextrins which are moderately or highly converted are likewise not suitable; their blends with high amylose starches to provide starch mixtures having the required minimum amylose content are also not suitable. In addition, the more highly converted dextrins impart an objectionable flavor and adversely affect the color of cheeses such as mozzarella. The ABF value (anhydrous borax fluidity) is defined as the ratio of the amount of water to the amount of anhydrous dextrin when the latter is cooked for 5 minutes at 90°C with 15% borax (on the weight of the dextrin), so as to provide a dispersion having a viscosity, when cooled to 25°C, of 70 mPa·s (cps) (see US—A—3,445,838). The calcium chloride water fluidity is described in Table I.

In the preparation of the converted starches by acid treatment, the granular starch base or derivatized starch base is hydrolyzed in the presence of an acid, such as sulfuric or hydrochloric acid, at a temperature below the gelatinization point of the starch. The starch is slurried in water, and the acid is then added. Typically, the reaction takes place over a 8—16 h. period, after which the acid is neutralized with alkali (e.g. to a pH of 5.5) and the starch recovered by filtration. The resulting converted starch will require cooking to pregelatinize the starch.

In the preparation of the converted starches by enzyme treatment, the granular starch base or derivatized starch base is slurried in water, and the pH is adjusted to 5.6—5.7 with alkali or acid. A small amount of alpha amylase enzyme (e.g. about 0.02% on the starch) is added to the slurry, which is then heated above the gelatinization point of the starch. When the desired conversion is reached, the pH is adjusted with acid (e.g. to about 2.0) to deactivate the enzyme and the dispersion is held at that pH for a period of at least 10 minutes. Thereafter the pH may be readjusted. The resulting converted starch dispersion is usually jet-cooked to ensure complete solubilization of the starch and deactivation of the residual enzyme.

In the preparation of the converted starches by oxidation with sodium hypochlorite, an aqueous starch suspension (35—44% solids) is usually treated with sodium hypochlorite solution (containing up to the indicated amount of active chlorine depending on the starch base) at pH 8—10 and 2138°C. The reaction is neutralized to pH 5—6.5 when the required level of oxidation (degradation) is reached and excess oxidant is destroyed by addition of sodium bisulfite solution or sulfur dioxide. The reaction product is washed to remove impurities, solubilized starch, and by-products of the reaction either on continuous vacuum filters or in hydrocyclones, recovered by filtration, and dried. The hypochlorite oxidizes a limited number of hydroxy groups to aldehyde, ketone, and carboxyl groups with concomitant cleavage of the glucoside bonds. The introduction of carboxyl groups into the linear amylose molecules reduces the tendency to gel. Such overstabilization must be avoided for converted high amylose starches herein and the previously indicated amount of active chlorine should not be exceeded. The resulting converted starch requires further cooking to pregelatinize the starch.

In the preparation of dextrins by pyrodextrinization, the granular starch is heated in the presence of moisture at a pH of 2—8 until the proper conversion is reached as indicated by the calcium chloride water fluidity value (for high amylose starches) or ABF value (for other starches).

It will be appreciated that, while the above acid- and enzyme-conversions may be carried out on either the derivatized starch or the underivatized starch, it is common practice to use the underivatized starch for the acid-conversion. It will also be appreciated that the degree of conversion, as indicated by the water fluidity, is affected by the amount of acid or enzyme used as well as the time and temperature. The conversion conditions should be adjusted to provide the preferred fluiditis indicated hereafter.

Derivatized high amylose starches and converted derivatized high amylose starches are also suitable for use herein. Suitable derivatives include esters such as the acetate and half-esters such as the succinate and octenylsuccinate prepared by reaction with acetic anhydride, succinic anhydride and octenylsuccinic anhydride, respectively; the phosphate derivative prepared by reaction with sodium or potassium orthophosphate or tripolyphosphate; ethers such as hydroxypropyl ether prepared by reaction with propylene oxide; and any other edible starch derivatives approved for use in food products.

Each modified starch should have the proper degree of substitution (D.S.) and/or conversion to provide the required balance between gel strength and melting characteristics. The amounts of derivatizing reagent used, as indicated hereinabove, will depend upon the type of reagent, the amylose content of the starch or starch mixtures, and the amount of conversion, if any. Converted starches and starches having a higher amylose content (e.g. 70% vs. 50%) form stronger gels and vice versa. Typically as the conversion is increased, the derivatization should be decreased to provide a proper balance of properties (and vice versa). The practitioner will also recognize that the gel strength required will vary with the cheese type and its moisture content.

The octenylsuccinate derivatives are preferred when better emulsifying properties are required. The practitioner will recognize that the emulsifying properties required will depend not only on the oil or fat content of the cheese product but the amount of caseinate being replaced. The preferred starch derivatives for use in a mozzarella cheese formulations that are equivalent to the imitation cheeses are jet-cooked or jet-cooked/spray-dried high amylose corn starch derivatives which have been prepared by treatment with 3—6% octenylsuccinic anhydride or jet-cooked/spray-dried converted high amylose corn starch derivatives having a calcium chloride water fluidity (described hereafter) of 40 or less (prepared by, for example, by treatment with 1—3% hydrochloric acid) which have been treated with 1—3% octenylsuccinic anhydride, e.g. high amylose corn (70% amylose) having a calcium chloride water fluidity of 10—25 (prepared, for example by treatment with about 1% hydrochloric acid) which has been treated with about 1% octenylsuccinic anhydride or high amylose corn (50% amylose) having a calcium chloride water fluidity of 5—35 (prepared, for example, by treatment with 2—3% hydrochloric acid) which has been treated with about 3% octenylsuccinic anhydride. Also preferred for the equivalent imitation cheeses are mixtures of a high amylose starch and a 50 water fluidity (W.F.) Amioca starch; the mixture contain 30—70 wt. % of the high amylose starch. The most preferred starch is a high amylose corn (50% amylose) treated with about 6% octenylsuccinic anhydride.

The crosslinking reaction is carried out according to standard procedures (see US—A—2,328,537 and US—A—2,801,242). The reaction conditions employed will, of course, vary with the type of crosslinking agent used, as well as the type of starch base (i.e. high amylose vs. other starches), the reaction scale, and the like. The reaction between the starch and crosslinking agent may be carried out in an aqueous medium, which is preferred, in which case the starch is slurried in water and adjusted to the proper pH and the crosslinking agent added thereto. The reaction is typically carried out at 5—60°C, preferably 20—40°C, for 0.22.4 hours. After the reaction is complete, the pH of the mixture is generally adjusted to 5.5—6.5 using a common acid or base as necessary. The granular product may be recovered by filtration and washed with water prior to pregelatinization. Pregelatinization is carried out by jet-cooking. Longer cooking times and/or higher cooking temperatures may be required to fully cook crosslinked high amylose starches.

Crosslinking agent suitable for food starches include epichlorohydrin, phosphorus oxychloride, sodium trimetaphosphate, and adipic-acetic anhydride (e.g. 1:4). The currently permitted treatment levels include up to 0.3% epichlorohydrin and up to 0.1% phosphorus oxychloride. Treatments with sodium trimeaphosphate providing up to 0.04% bound (residual) phosphate, calculated as phosphorus are permitted. Treatments with adipic/acetic anhydride may include up to 0.12% adipic anhydride and up to 2.5% bound acetyl. Of the crosslinking agents discussed hereinabove, phosphorus oxychloride is preferred in an amount of about 0.05%.

The above starch modification procedures, i.e. pregelatinization, conversion, dextrinization, derivatization, and crosslinking are conventional and well-known to those skilled in the art and described in such publications as "Handbook of Water-Soluble Gums and Resins", Robert L. Davidson (Editor), Chapter 22: Starch and Its Modifications by M. W. Rutenberg, McGraw Hill Book Co. (New York) 1980.

In the preparation of the modified starches, the conversion or dextrinization, is typically carried out prior to the pregelatinization step; however, it is possible to pregelatinize the starch prior to these treatments. Likewise, typically the derivatization or crosslinking is carried out prior to pregelatinization; however, this sequence can also be reversed.

The preparation of the imitation cheeses is conventional and well-known to those skilled in the art. Methods for the preparation of typical cheese products are described in the following patents, whose disclosures are incorporated herein by reference:

US—A—4,232,050 and US—A—4,075,360 which disclose methods for the preparation of imitation mozzarella cheeses;

US—A—4,197,322 which describes the preparation of imitation cheeses such as mozzarella and processed American Cheeses;

US—A—4,104,413 which describes the preparation of imitation cheeses such as mozzarella and cheddar cheeses;

US—A—3,922,374 which describes a process for the preparation of imitation cheeses such as pasta filata (mozzarella), cheddar, and pasteurized processed American cheeses;

US—A—3,397,994 and US—A—4,166,142 which describe methods for the preparation of imitation cream cheese spread and imitation cheese spreads;

US—A—3,502,481 which describes the preparation of cheese-like spreads;

US—A—3,806,606 which describes the preparation of synthetic cheese having the texture and eating quality of natural dairy cheese; and

US—A—4,110,484 which describes a process for the manufacture of acid-set imitation and filled cheese products.

The preferred imitation mozzarella cheeses herein are typically prepared from 20 to 24% of a vegetable fat such as shortenings like Crisco or vegetable oils such as corn, sesame, cottonseed, safflower, groundnut, coconut, soybean, olive, palm kernel, and/or wheatgerm oil; from 20 to 30% of a mixture of 20—80% sodium and calcium caseinates and 20—80% of the pregelatinized high amylose starch or its mixtures with other starches; 42 to 50% water; 0.5 to 3.0% sodium chloride; 0.8 to 2.5% trisodium phosphate, sodium aluminum phosphate, and/or calcium phosphate; 0.5 to 2.0% adipic, lactic and/or sorbic acid; and 0.0001 to 1% cheese additives such as butter flavoring. An imitation mozzarella cheese which is functionally equivalent to the caseinate-based cheese can be prepared with 20 to 30% of the above high amylose starch and no caseinate is required.

In imitation mozzarella cheese, a mixture of sodium and calcium caseinate is used to provide the final stretch, emulsifying, gel and melt properties. The ratio of sodium to calcium caseinate may be 10—90: 90—10, preferably 30—70:70—30. For the replacement cheeses both high sodium and high calcium caseinate systems are useful with the starches herein. The solubilized caseinates may be formed *in situ* by adding an alkali such as sodium, potassium or calcium hydroxide to dispersions of acid casein or rennet casein.

It is surprising that the pregelatinized high amylose starches herein can replace all of the caseinate and form cheese products that show no oil loss during preparation and have acceptable properties. It is also surprising that selected derivatized pregelatinized high amylose starches provide an imitation mozzarella cheese product fully equivalent to the caseinate-based products.

Typically, the above cheeses are prepared by forming an emulsion of the starch and water (or, starch, water, and caseinate) with the melted fat or oil, and adding the salts and acids at the appropriate times. The mixture is heated during the emulsification and the final plastic mass is compressed and refrigerated for several days.

The emulsion may be formed in several ways, such as the following:

1) mixing the phosphate salts with water and casein, allowing the casein to partially hydrate, and then adding the oil, starch, acids, remaining salts, flavor and color;

2) blending the casein and starch with the oil and then adding the water, salts, acids, flavor and color;

3) adding all the ingredients (both wet and dry) and mixing them in a cooker with a double screw mixing system;

4) mixing the water (hot) and all the salts, adding a blend of casein and starch, and then adding the oil, acids, flavor and color;

5) mixing the oil and water, adding the blended casein and starch, and then adding the salts, acids, flavor and color;

6) mixing all the dry ingredients except the acids, adding about 75% of the water (hot), adding most of the oil (about 70%), and then adding the remaining water, acids, and remaining oil; or

7) mixing the casein, salts, and water, adding a mixture of the oil and starch, and adding the acids, flavor, and color after cooking.

The above procedures may also be used when no casein is present and when melted fat is used in place of oil. Typically the cooking is carried out by heating the mixture to an internal temperature of 76—85°C (170—175°F). The cooking time may vary from 65 seconds to 7.5 minutes and will depend upon the type of cooker selected, many of which use steam injection.

Imitation processed American and Cheddar cheeses have a similar composition except that different salt(s) and/or acid(s) are used in their preparation.

In the examples which follow, all parts and percentages are given by weight and all temperatures are in degrees Celsius unless otherwise noted. The cheese preparation and evaluation was as follows:

## Preparation of The Cheese

The cheeses were prepared by dry blending the caseinates (control cheese), caseinates and starch (partial replacement cheese), or starch (total replacement cheese) at low speed in a Hobart mixer. The melted shortening or oil was blended in and mixing was continued for 3 minutes. About 1/2 of the mixture was removed and, while continuing agitation, about 85% of the water was added. Mixing was continued for about 1 minute until the emulsion was homogeneous. The removed mixture was added and agitation was continued for about 2 minutes. Sorbic acid and the setting salts were then added at medium speed and mixing was continued until the mixture was homogeneous. The adipic acid and remaining water were added and mixed in. The resulting cheeses were removed, pressed slightly to firm the mixture, and refrigerated at 4°C (40°F) for 1—3 days. The laboratory preparation simulates a commercial preparation wherein steam is injected into the final mixture.

The control cheese and cheese containing the starch at 50% replacement were formulated as follows:

| Ingredients (parts) | High Sodium Casinate Cheese Formulation[a]. | | High Calcium Caseinate Cheese Formulation[b]. | |
|---|---|---|---|---|
| | (Control) | (Replacement) | (Control) | (Replacement) |
| Sodium Caseinate | 21.2 | 10.6 | 5.4 | 2.7 |
| Calcium Caseinate | 5.4 | 2.7 | 21.2 | 10.6 |
| Starch | - | 13.3 | - | 13.3 |
| Shortening | 22.8 | 22.8 | 22.6 | 22.6 |
| Sodium Chloride | 0.9 | 0.9 | 0.9 | 0.9 |
| Trisodium Phosphate | 0.3 | 0.3 | 0.3 | 0.3 |
| Sodium Aluminum Phosphate | 0.3 | 0.3 | 0.3 | 0.3 |
| Calcium Phosphate | 0.3 | 0.3 | 0.3 | 0.3 |
| Adipic Acid | 0.3 | 0.3 | 0.3 | 0.3 |
| Sorbic Acid | 0.3 | 0.3 | 0.3 | 0.3 |
| Water | 48.5 | 48.5 | 48.5 | 48.5 |
| | 100.3 | 100.3 | 100.3 | 100.3 |

a. 80%/20% Na/Ca caseinate    b. 80%/20% Ca/Na caseinate

Cheese Evaluation

The cheeses were evaluated for gel strength, emulsion stability during preparation (oil retention or oil loss) and after preparation (oil release on the cheese surface), and stretch properties by touching and pulling the cheese; for shred by grating the cheese; for melt by heating the grated cheese on a pizza and observing the melt characteristics, i.e. fusion, lack of fusion, or excessive fusion (too much melting resulting in a translucent layer), as well as too little or excessive oil in the melt; and for string by pulling the melted cheese apart. The cheeses were given an overall rating based on the above properties with cheeses which lost oil during their preparation being given a rating of zero. Gel strength and shred were considered the next most important properties. A rating below 5 is considered unsatisfactory. Acceptable cheeses (i.e. functionally equivalent) had a rating of at least 5 and were satisfactory in flavor texture, and mouth-feel. A perfect replacement cheese, which would have a very firm gel and excellent shred, melt, oil release and string, would have an overall rating 10. Equivalent replacement cheeses which had a rating of 8—9 were comparable to or better than the control in gel, shred, melt, oil release, and string. Nevertheless, both the high sodium and high calcium caseinate control cheeses were given automatic ratings of 10. Typically, the high calcium caseinate control cheese is better than the high sodium caseinate control in melt, oil release, and string.

Example I

This example describes the preparaton of imitation mozzarella cheeses which contain a pregelatinized modified potato amylose.

Preparation of The Converted Amylose

A slurry of 100 parts of potato amylose in 150 parts of water was heated to 52°C, the indicated amount of hydrochloric acid (1.75%) was added, and the mixture was stirred for 16 hours at 52°C. The hydrolysis was stopped by neutralizing the mixture with alkali (a solution of 3% sodium hydroxide) to a pH of 5.5. The converted amylose was recovered by filtration, washed, and dried.

Preparation of The Derivatized Amylose

The derivative was prepared by slurrying 100 parts of the above converted amylose into a solution of 30 parts sodium sulfate in 150 parts water, adding 1.5 parts sodium hydroxide, and then adding the indicated amount of propylene oxide (25% PO). The slurry was agitated for 16 hours at 40°C in a sealed vessel. When the reaction was completed, the pH was adjusted to 5.5 with acid. The modified starch (converted and derivatized) was recovered by filtration, washed, and air dried.

Pregelatinization of The Modified Amylose

A total of 100 parts of the modified amylose was then slurried in 233 parts of water and passed through a continuous steam jet-cooker (JC) at 138°C. The resulting dispersion was spray-dried (SD) at a chamber temperature of 210°C and an outlet temperature of 90°C.

The pregelatinized modifed amylose was evaluated at 50% replacement in the high sodium and high calcium caseinate cheese formulations. The results are shown in Table I.

The results show that, in the high sodium caseinate cheese formulation, the product containing the modified amylose starch was better than the control in string, melt and oil release, equivalent in gel strength, but somewhat poorer in shred (very slightly matted). In the high calcium caseinate cheese formulation, the product containing the modified amylose was better in melt, equivalent in oil release and string, but poorer in gel (slightly soft) and shred (slightly matted). The imitation mozzarella cheese products containing the modified amylose as a partial caseinate replacement were functionally equivalent to the controls for both the high sodium and high calcium caseinate cheese formulations. Similar cheese products may be prepared using olive oil, partially hydrogenated soy bean oil, and various solidified hydrogenated vegetable oils and comparable results would be expected.

Example II

This example describes the preparation of imitation mozzarella cheeses, based on the high calcium caseinate formulation, containing various high amylose starches at replacement levels of 25, 50, and 100%.

The converted starches were prepared using the procedure described in Example I. The derivatized and crosslinked starches were prepared using the procedures described below. The starches were pregelatinized using the procedure of Example I except that in some cases the resulting starch dispersion, adjusted to the solids content required for the replacement cheese being prepared, was used directly in the cheese formulation without spray drying and the crosslinked starch was jet cooked at 143°C instead of 138°C.

TABLE I

| Cheese Formulations | Caseinate Replacement Level (%) | Gel | Shred | Melt | Oil Release | String | Overall Rating |
|---|---|---|---|---|---|---|---|
| High Na Caseinate Control | 0% | Firm | V. Good | Poor[b]. | Fair | Poor[c]. | 10[d]. |
| High Na Caseinate/Amylose[a]. | 50% | Firm | Good (v. sl. matted) | Fair (better fusion) | Good | Good | 7 |
| High Ca Caseinate Control | 0% | Firm | V. Good | Good | Good | Good | 10[d]. |
| High Ca Caseinate/Amylose[a]. | 50% | Sl. Soft | Fair (sl. matted) | Excellent | Good | Good | 6 |

a. 100% amylose (1.75% HCl); 25% PO; JC/SD having a calcium chloride water fluidity (CaCl$_2$ WF) of 55. Water fluidity (WF) is a measurement commonly used to determine the viscosity of converted starches and described in US—A—4,288,199. Calcium chloride water fluidity is determined using the procedure described in the above patent except that 100 g. of a 20% calcium chloride solution is used in place of 100 g of water and a stainless steel cup is used in place of the copper cup.
b. No fusion of grated cheese pieces.
c. Too short.
d. As indicated, the controls were given an automatic rating of 10 despite the differences in their properties.

Preparation of The Octenylsuccinate Derivative

The converted starch was slurried in 150 parts water, the pH was adjusted to 7.5 with sodium hydroxide, and the indicated amount of octenylsuccinic anhydride (OSA) was added slowly while the pH was maintained at 7.5 with the alkali. The reaction was complete when no further addition of alkali was necessary. The pH was adjusted and the resulting derivatives were recovered as in Example I.

Preparation of The Acetate Derivative

The derivative was prepared by slurrying 100 parts of the converted starch in 150 parts water, adjusting the pH to 8.3 with 3% sodium hydroxide solution, and slowly adding the indicated amount of acetic anhydride (Ac$_2$O) while maintaining the pH at 8.3 with the above alkali. The reaction was complete when no further addition of alkali was necessary. The pH was adjusted and the resulting derivative was recovered as in Example I.

Preparation of The Crosslinked Starch

The crosslinked starch was prepared by slurrying 100 parts of starch in 150 parts water, adding 0.8 part sodium hydroxide, 1.0 part sodium chloride, and then adding the indicated amount of phosphorus oxychloride. The slurry was agitated for 3 hours at room temperature. When the reaction was completed, the pH was adjusted to 5.5 with acid. The starch was recovered by filtration, washed, and air dried.

The cheese evaluations are summarized in Table II. The results show that the pregelatinized unmodified and modified (i.e. converted, derivatized, derivatized converted, and crosslinked) Hylon® V and VII starches (tradename of National Starch and Chemical Corp. for high amylose starches having amylose contents of about 50 and 70%, respectively) all gave acceptable cheese products at 25—50% replacement. The converted Hylon® V and VII starches gave acceptable cheese products even at 100% replacement, but the derivatized converted Hylon® V and VII starches which were overstabilized (treated with above 0.75% OSA) gave unacceptable cheese products at this replacement level. The Hylon® V starch treated with 6% OSA provided the best cheese product. The Hylon® V starches treated with 2% and 3% HCl and 3% OSA and Hylon® VII starch treated with 1% HCl and 1% OSA also provided excellent cheeses. The products having overall ratings of 8—9 were equivalent to or better than control.

TABLE II

| | STARCH | | | CHEESE | | | | | | |
|---|---|---|---|---|---|---|---|---|---|---|
| Modification | Estimated Amylose Content (%) | CaCl$_2$ WF | Replacement Level (%) | Gel | Shred | Melt | Oil Release | String | Overall Rating |
| Control Cheese (no starch) | | | 0 | Firm | V. Good | Good | Good | Good | 10 |
| Hylon®V; JC/SD | 50 | - | 25 | Firm | Good | Fair | Fair | Poor | 5.5 |
| Hylon®V; 6% OSA; JC | 50 | * | 50 | Firm[a] | Excellent | Excellent[a] | Good | Excellent | 9 |
| Hylon®V; 1% Ac$_2$O; JC | 50 | * | 50 | V. Firm | Excellent | Poor | Fair | Poor | 7 |
| Hylon®V; 10% Ac$_2$O; JC | 50 | * | 50 | S. Soft | Fair (sl. matted) | Fair | Fair | Fair | 5 |
| Hylon®V (1% HCl); 1% Ac$_2$O; JC | 50 | * | 50 | V. Firm | Excellent | Poor | Fair | Fair | 7 |
| Hylon®VII (1% HCl); 1% OSA; JC/SD | 70 | 17 | 50 | V. Firm | Good | Good | Good | Good | 8 |
| Hylon®V (1% HCl); 3% OSA; JC/SD | 50 | * | 50 | Firm[a] | Good (sl. brittle) | Good | Fair | Fair | 6.5 |
| Hylon®V (2% HCl); 3% OSA; JC/SD | 50 | 13 | 50 | Firm[a] | V. Good | Good | Good | Good | 8 |
| Hylon®V (3% HCl); 3% OSA; JC/SD | 50 | 32 | 50 | Firm[a] | V. Good | Excellent | Good | Good | 8 |

EP 0 120 498 B1

TABLE II (continued)

| STARCH | | | CHEESE | | | | | | |
|---|---|---|---|---|---|---|---|---|---|
| Modification | Estimated Amylose Content (%) | CaCl$_2$ WF | Replacement Level (%) | Gel | Shred | Melt | Oil Release | String | Overall Rating |
| Hylon®V (4% HCl); 3% OSA; JC/SD | 50 | 46 | 50 | Firm | Good | Good | Fair | Good | 7 |
| Hylon®V; 0.05% POCl$_3$; JC | 50 | * | 50 | Firm | Good | Fair | Fair | Fair | 6 |
| Hylon®V (2% HCl); JC | 50 | 13 | 100 | V. Firm | Good | Poor | Fair | Poor | 5.5 |
| Hylon®V (2% HCl); 3% OSA;JC | 50 | 13 | 100 | V. Soft | Poor (matted) | Fair | Fair | Poor | 2.5 |
| Hylon®VII (2% HCl); JC | 70 | 31 | 100 | Firm | Good | Poor | Fair | Poor | 5 |
| Hylon®VII (2% HCl); 0.75% OSA; JC | 70 | 32 | 100 | Firm | Good | Poor | Fair | Poor | 5 |
| Hylon®VII (2% HCl); 1.5% OSA; JC | 70 | 33 | 100 | Sl. Soft (bready) | Poor (matted) | Poor | Fair | Poor | 3 |
| Hylon®VII (2% HCl); 3.0% OSA; JC | 70 | N.D. | 100 | Soft | Poor (matted) | Poor | Fair | Poor | 2.5 |

a.Like the Control Cheese
*Too thick (i.e. high in viscosity) to be measured.
N.D. - Not Determined.

EP 0 120 498 B1

## Example III

This example describes the use of a modified high amylose starch at 50% replacement in other cheese formulations. The control cheeses and starch-containing cheeses should be formulated as before using the following ingredients:

| Ingredients (parts) | Cheddar Cheese | | American Cheese | |
|---|---|---|---|---|
| | (Control) | (Replacement) | (Control) | (Replacement) |
| Calcium caseinate | 21.0 | 10.5 | 20.0 | 10.0 |
| Sodium caseinate | 5.0 | 2.5 | 5.0 | 2.5 |
| Modified starch | - | 13.0 | - | 12.5 |
| Shortening | 32.3 | 32.3 | 28.1 | 28.1 |
| Salt | 2.2 | 2.2 | 2.0 | 2.0 |
| Sodium aluminum phosphate | 0.5 | 0.9 | 0.9 | 0.9 |
| Citric acid | 0.9 | 0.5 | 0.5 | 0.5 |
| Sodium citrate | 0.4 | 0.4 | 0.2 | 0.2 |
| Cheese flavoring | - | - | - | - |
| Cheese coloring | - | - | - | - |
| Water | 37.6 | 37.6 | 43.3 | 43.3 |
| | 100.0 | 100.0 | 100.0 | 100.0 |

The modified starch used in the imitation cheddar cheese was Hylon® V, acid-converted with 2% HCl, derivatized with 3% octenylsuccinic anhydride, jet-cooked and spray-dried. The resulting cheese was acceptable. In comparison with the control, the gel was satisfactory (firm vs. very firm); shred was poorer (very slightly wet with slight matting vs. very slightly brittle with no matting); melt was good (slight fusion with slight to moderate oil release vs. no fusion with no oil release); and flavor was equivalent.

The modified starch suggested for use in the imitation processed American cheese is Hylon® V, acid-converted with 1—2% HCl, derivatized with up to 2% octenylsuccinic anhydride, jet-cooked and spray-dried. Comparable results would be expected and an acceptable product should result.

## Example IV

This example demonstrates that the starches to be suitable herein for 100% replacement must have the high amylose content. A drum-dried (DD) underivatized corn starch and jet-cooked, spray-dried underivatized and derivatized 20 W.F. corn starches were evaluated in the high calcium caseinate imitation mozzarella cheese formulation. The results are shown in Table III which includes data from Table II on suitable modified high amylose corn starches.

The results show that the cheeses containing the corn starch all lost oil and were unacceptable. They were also poor in shred, melt, and string. The converted high amylose starches and the derivative thereof, however, formed acceptable cheese products.

## TABLE III

| | STARCH* | | | CHEESE | | | | | | |
|---|---|---|---|---|---|---|---|---|---|---|
| Modification | Estimated Amylose Content (%) | CaCl₂ WF | Replace-ment Level (%) | Gel | Shred | Emulsion**** Stability (oil loss) | Melt | Oil Release | String | Overall Rating |
| D.D. corn (comparative) | 27 | N.D. | 100 | Soft** | Poor | Poor (50 cc.) | Poor | Fair | Poor | 0 |
| 20 WF corn; JC/SD (comparative) | 27 | - | 100 | Soft** | Poor | Poor (50 cc.) | Poor | Poor | Poor | 0 |
| 20 WF corn; 3% OSA; JC/SD (comparative) | 27 | - | 100 | V. Soft** | Fair | Poor (20 cc.) | Good | Poor | Fair | 0 |
| 40 WF corn; 1% OSA; JC/SD (comparative) | 27 | - | 100 | Soft*** | Poor | Good | Poor | Poor | Poor | 2 |
| Hylon®V (2% HCl); JC | 50 | 13 | 100 | V. Firm | Good | Good | Poor | Fair | Poor | 5.5 |
| Hylon®VII (2% HCl); JC | 70 | 31 | 100 | Firm | Good | Good | Poor | Fair | Poor | 5 |
| Hylon®VII (2% HCl); 0.75% OSA; JC | 70 | 32 | 100 | Firm | Good | Good | Poor | Fair | Poor | 5 |
| Control cheese | - | - | 0 | Firm | V. Good | Good | Good | Good | Good | 10 |

\* WF starches were modified by conversion. Water fluidity (WF) determination procedure — see footnote of Table I.
** Like cottage cheese.
*** Crumbles.
**** About 100 ml of melted shortening was used in the cheese preparation.

EP 0 120 498 B1

## Example V

This example demonstrates that the high amylose starch must be pregelatinized to form an acceptable cheese product. The evaluations were carried out at 50% replacement in the high calcium caseinate formulation. The results are given in Table IV.

The results show that the Hylon® V starch which had not been pregelatinized formed an unacceptable cheese product even though its emulsion stability was good (no oil loss during preparation). It was inferior to the cheese containing the jet-cooked Hylon® V starch in all properties (soft vs. very firm gel; poor vs. good shred; and poor vs. fair melt, oil release and string). In addition, it had an unacceptable flavor and appearance.

## Example VI

This example shows the use of oxidized starches and dextrins as caseinate replacements at the 50% level in the high calcium caseinate cheese formulation. It also establishes the maximum treatment levels that give acceptable cheese products.

## TABLE IV

| STARCH | | | CHEESE | | | | | | |
|---|---|---|---|---|---|---|---|---|---|
| | Estimated Amylose Content (%) | CaCl2 WF | Gel | Shred | Emulsion* Stability (oil loss) | Melt | Oil Release | String | Overall Rating |
| Control | - | | Firm | V. Good | Good | Good | Good | Good | 10 |
| Hylon®V | 50 | *** | Soft (bready) | Poor (matted, sl. wet) | Good | Poor (no fusion) | Poor | Poor (pasty) | 2** |
| Hylon®V; JC | 50 | *** | V. Firm | Good (some crumbling) | Good | Fair | Fair | Good | 7 |

\* About 100 ml of melted shortening were used in the cheese preparation.
\*\* The cheese product was unacceptable in flavor (starchy) and color (white instead of creamy).
\*\*\* Too thick to be measured.

EP 0 120 498 B1

Part A — Oxidized Starches

The starches were prepared by slurrying 100 parts of Hylon® V starch in 150 parts water and adjusting the pH to 5.5 with acid or alkali. The starch slurry was placed in insulated jars and the alkaline sodium hypochlorite solution containing the indicated level of active chlorine was slowly added over a 90 min. period. The reaction was carried out over a 16 hr. period at room temperature. Any excess chlorine was neutralized with a solution of sodium bisulfite, the pH was adjusted to 5.5 with acid, and the oxidized starch recovered by filtration, washed, and dried. The oxidized starches were jet-cooked and evaluated in the cheese. The results are given in Table V which includes data on the nonconverted Hylon® V.

The results show that the oxidized starches formed acceptable cheese products provided they were not overstabilized. As the treatment level reached 5.5% active Cl the starch became overstabilized.

Part B — Dextrins

The dextrins were prepared by spraying an agitated granular Hylon® V starch with an aqueous hydrochloric acid solution (1 part acid/3 parts water). Spraying was continued until the pH of the starch was 3.2. The acidified starch was screened through a U.S. #40 mesh screen (0.37 mm) to remove large particles which would char upon dextrinization. The starch (11.4% moisture) was then heated in a dextrinizer with samples being removed at various time intervals as the temperature of the starch increased and its moisture content decreased. The temperature and moisture content of the dextrins was as follows: at 1.75 h, 110°C and 4.0%; at 2.0 h, 118°C and 2.6%; at 2.25 h, 124°C and 0.8%; and at 2.5 h, 135°C and 0%. The dextrins were jet-cooked and evaluated in the cheese. The results are given in Table V.

The results show that the mildly converted dextrins (heating times of 2.25 h or less) having ABF values greater than 4 provided acceptable cheese products. The cheese containing the Hylon® V dextrinized for 2.5 h (ABF value of approximately 4) was unacceptable in all properties.

TABLE V

| STARCH | | CHEESE | | | | | |
|---|---|---|---|---|---|---|---|
| (conversion - type and level) | CaCl$_2$ WF | Gel | Shred | Melt | Oil Release | String | Overall Rating |
| Hylon®V (oxidized - 2.5% active Cl);JC | * | Firm | Good | Poor | Fair | Poor | 5 |
| Hylon®V (oxidized - 3.5% active Cl);JC | * | Firm | Good | Poor | Fair | Poor | 5 |
| Hylon®V (oxidized - 5.5% active Cl);JC | * | Sl. Soft | Poor (matted) | Fair | Fair | Fair | 4 |
| Hylon®V (dextrinized - 1.75 h);JC | N.D. | Firm | Good | Poor | Poor | Good | 6 |
| Hylon®V (dextrinized - 2.0 h) ;JC | N.D. | Firm | Good | Fair | Good | Good | 7 |
| Hylon®V (dextrinized - 2.25 h);JC | 48 | Sl. Soft | Fair | Fair | Fair | Good | 5 |
| Hylon®V (dextrinized - 2.5 h);JC* | N.D. | Soft (bready) | Poor (matted) | Poor | Poor | Poor | 2 |
| Hylon®V (non-converted);JC | - | V. Firm | Good (some crumbling) | Fair | Fair | Good | 7 |

*To thick to be determined.

EP 0 120 498 B1

Summarizing, this invention is seen to provide imitation cheese products functionally equivalent to caseinate- and vegetable fat-based imitation cheese products which contain pregelatinized unmodified and modified high amylose corn starches as a partial or total replacement for the caseinates. It also provides imitation mozzarella cheeses containing selected modified starches or starch blends which are fully equivalent to or better than the control cheese.

**Claims**

1. An imitation cheese product comprising water, an edible vegetable fat or vegetable oil, and cheese additives and characterized in that 20 to 100% by weight of the caseinate typically present in the product is replaced by an edible pregelatinized high amylose starch having an amylose content of at least 40% by weight, the derivatives thereof, the converted products thereof, the converted derivatized products thereof, the crosslinked products thereof; the high amylose starch derivatives being prepared by treatment with up to about 25% propylene oxide, up to about 5% succinic anhydride, up to about 10% octenylsuccinic anhydride, or with a sufficient amount of acetic anhydride to provide a maximum of about 6% bound acetyl, or with a sufficient amount of sodium or potassium orthophosphate, sodium or potassium tripolyphosphate, or mixtures thereof to provide a maximum of about 0.8% bound phosphate, calculated as phosphorus; the high amylose converted starch products being selected from the group consisting of fluidity starches prepared by acid- or enzyme-conversion, oxidized starches prepared by treatment with less than 5.5% active chlorine, and dextrins having a calcium chloride water fluidity of less than about 50; the treatment percentages being by weight based on the starch.

2. The product of Claim 1, characterized in that the caseinate is a mixture of 20—80% by weight of sodium and calcium caseinate and from 20—80% of the caseinate is replaced by the edible pregelatinized high amylose starch having an amylose content of at least 40% by weight, the derivatives thereof, the converted products thereof.

3. The product of Claim 2, characterized in that 50—75% of the caseinates is replaced by the starch, and in that the ratio of sodium to calcium caseinate is 10—90:90—10.

4. The product of Claim 3, characterized in that the starch is a derivatized high amylose corn starch prepared by treatment with 3—6% octenylsuccinic anhydride or a converted derivatized high amylose corn starch having a calcium chloride water fluidity of about 40 or less and prepared by treatment with 1—3% octenylsuccinic anhydride, the starch having an amylose content of 50—70% by weight and being pregelatinized by jet-cooking or jet-cooking and spray-drying.

5. The product of Claim 4, characterized in that the starch derivative containing 50% amylose is prepared by treatment with 6% octenylsuccinic anhydride; or in that the converted derivatives containing 50% amylose have a calcium chloride water fluidity of 5—35 and are prepared by treatment with 3% octenylsuccinic anhydride; or in that the converted derivative containing 70% amylose has a calcium chloride water fluidity of 10—25 and is prepared by treatment with 1% octenylsuccinic anhydride.

6. The product of Claim 5, characterized in that the ratio of sodium to calcium caseinate is 20—80:80—20.

7. The product of Claim 1, characterized in that the caseinate is a mixture of sodium and calcium caseinate and 20—80% by weight of the caseinate mixture is replaced by an edible pregelatinized high amylose starch having an amylose content of at least 40% by weight; and characterized in that the high amylose starch is a fluidity starch prepared by acid- or enzyme-conversion, an oxidized starch prepared by treatment with less than 5.5% active chlorine, or a dextrin having a calcium chloride water fluidity of less than about 50.

8. The product of Claim 7, characterized in that the ratio of sodium to calcium caseinate 20—80:80—20; and characterized in that the pregelatinized high amylose starch is a jet-cooked or jet-cooked/spray-dried starch and the other pregelatinized starch is a drum-dried, jet-cooked, or jet-cooked/spray-dried corn, potato, tapioca, or waxy maize starch.

**Patentansprüche**

1. Käseersatzprodukt, das Wasser, ein eßbares Pflanzenfett oder Pflanzenöl und Käsezusätze umfaßt und dadurch gekennzeichnet ist, daß 20 bis 100 Gew.-% des typischerweise im Produkt anwesenden Kaseinates durch eine eßbare vorgelatinierte Stärke hohen Amylosegehaltes, die mindestens 40 Gew.-% Amylose enthält, durch Derivate derselben, umgewandelte Produkte derselben, umgewandelte derivatisierte Produkte derselben oder vernetzte Produkte derselben ersetzt sind, wobei die Derivate der Stärke hohen Amylosegehaltes hergestellt sind durch Behandlung mit bis zu etwa 25% Propylenoxid, bis zu etwa 5% Bernsteinsäureanhydrid, bis zu etwa 10% Octenylbernsteinsäureanhydrid oder mit einer ausreichenden Menge Essigsäureanhydrid, um maximal etwa 6% gebundenes Acetyl zu ergeben, oder mit einer ausreichenden Menge Natrium- oder Kaliumorthophosphat, Natrium- oder Kaliumtripolyphosphat oder Mischungen derselben, um maximal etwa 0,8% gebundenes Phosphat, berechnet als Phosphor, zu ergeben, wobei die umgewandelten Produkte einer Stärke hohen Amylosegehaltes ausgewählt sind aus der aus Fluiditätsstärken, hergestellt durch Säure- oder Enzymumwandlung, oxidierten Stärken, hergestellt durch Behandlung mit weniger als 5,5% aktivem Chlor, und Dextrinen mit einer Calciumchlorid-Wasserfluidität von weniger als etwa 50 bestehenden Gruppe, wobei die Behandlungsprozentsätze auf Gewichtsbasis, bezogen auf die Stärke, angegeben sind.

2. Produkt nach Anspruch 1, dadurch gekennzeichnet, daß das Kaseinat eine Mischung aus 20 bis 80 Gew.-% Natrium- und Calciumkaseinat ist und daß 20 bis 80% des Kaseinates durch die eßbare vorgelatinierte Stärke hohen Amylosegehaltes mit mindestens 40 Gew.-% Amylose, die Derivate derselben und die umgewandelten Produkte derselben ersetzt sind.

3. Verfahren nach Anspruch 2, dadurch gekennzeichnet, daß 50 bis 75% der Kaseinate durch die Stärke ersetzt sind und daß das Verhältnis von Natrium- zu Calciumkaseinat 10—90:90—10 beträgt.

4. Produkt nach Anspruch 3, dadurch gekennzeichnet, daß die Stärke eine derivatisierte Maisstärke hohen Amylosegehaltes, hergestellt durch Behandlung mit 3 bis 6% Octenylbernsteinsäureanhydrid, oder eine umgewandelte derivatisierte Maisstärke hohen Amylosegehaltes mit einer Calciumchlorid-Wasserfluidität von etwa 40 oder weniger und durch Behandlung mit 1 bis 3% Octenylbernsteinsäureanhydrid hergestellt ist, wobei die Stärke einen Amylosegehalt von 50 bis 70 Gew.-% aufweist und durch Strahlkochen oder Strahlkochen und Sprühtrocknen vorgelatiniert ist.

5. Produkt nach Anspruch 4, dadurch gekennzeichnet, daß das 50% Amylose enthaltende Stärkederivat durch Behandlung mit 6% Octenylbernsäureanhydrid hergestellt ist oder daß die umgewandelten Derivate mit 50% Amylosegehalt eine Calciumchlorid-Wasserfluidität von 5 bis 35 haben und durch Behandlung mit 3% Octenylbernsteinsäureanhydrid hergestellt sind oder daß das umgewandelte Derivat mit 70% Amylosegehalt eine Calciumchlorid-Wasserfluidität von 10 bis 25 aufweist und durch Behandlung mit 1% Octenylbernsteinsäureanhydrid hergestellt ist.

6. Produkt nach Anspruch 5, dadurch gekennzeichnet, daß das Verhältnis von Natrium- zu Calciumkaseinat 20—80:80—20 beträgt.

7. Produkt nach Anspruch 1, dadurch gekennzeichnet, daß das Kaseinat eine Mischung aus Natrium- und Calciumkaseinat ist und 20 bis 80 Gew.-% der Kaseinatmischung durch eine eßbare vorgelatinierte Stärke hohen Amylosegehaltes mit mindestens 40 Gew.-% Amylose ersetzt sind, und dadurch gekennzeichnet, daß die Stärke hohen Amylosegehaltes eine Fluiditätsstärke, hergestellt durch Säure- oder Enzymumwandlung, eine oxidierte Stärke, hergestellt durch Behandlung mit weniger als 5,5% aktivem Chlor, oder ein Dextrin mit einer Calciumchlorid-Wasserfluidität von weniger als etwa 50 ist.

8. Produkt nach Anspruch 7, dadurch gekennzeichnet, daß das Verhältnis von Natrium- zu Calciumkaseinat 20—80:80—20 beträgt und die vorgelatinierte Stärke hohen Amylosegehaltes eine strahlgekochte oder strahlgekochte/sprühgetrocknete Stärke ist und die andere vorgelatinierte Stärke eine trommelgetrocknete, strahlgekochte oder strahlgekochte/sprühgetrocknete Mais-, Kartoffel-, Tapioka- oder Wachsmaisstärke ist.

## Revendications

1. Fromage imitation contenant de l'eau, une graisse végétale ou une huile végétale comestible, et des additifs de fromage, caractérisé en ce que 20 à 100% en poids du caséinate présent de façon caractéristique dans le produit est remplacé par un amidon comestible à haute teneur en amylose prégélatinisé, ayant une teneur en amylose d'au moins 40% en poids, par ses dérivés, par ses produits convertis, par des produits dérivés convertis, et par ses produits réticulés; les dérivés d'amidon à haute teneur en amylose étant préparés par traitement avec jusqu'à environ 25% d'oxyde de propylène, jusqu'à environ 5% d'anhydride succinique, jusqu'à environ 10% d'anhydride octénylsuccinique, ou avec une quantité suffisante d'anhydride acétique, pour procurer un maximum d'environ 6% de groupes acétyle liés, ou avec une quantité suffisante d'orthophosphate de sodium ou de potassium, de tripolyphosphate de sodium ou de potassium ou de leurs mélanges pour procurer un maximum d'environ 0,8% de groupes phosphate liés, calculés en tant que phosphore, les amidons convertis à haute teneur en amylose étant choisis dans le groupe comprenant des amydons de fluidité préparés par conversion par acides ou par enzymes, des amidons oxydés préparés par traitement avec moins de 5,5% de chlore actif, et des dextrines ayant une fluidité aqueuse au chlorure de calcium de moins d'environ 50.

2. Produit selon la revendication 1, caractérisé en ce que le caséinate est un mélange de 20 à 80% en poids de caséinate de sodium et de calcium et en ce que 20 à 80% du caséinate est remplacé par l'amidon comestible à haute teneur en amylose prégélatinisé ayant une teneur en amylose d'au moins 40% en poids, par ses dérivés ou par ses produits convertis.

3. Produit selon la revendication 2, caractérisé en ce que 50 à 75% des caséinates est remplacé par l'amidon et en ce que le rapport du caséinate de sodium au caséinate de calcium est 10—90:90—10.

4. Produit selon la revendication 3, caractérisé en ce que l'amidon est un amidon de maïs à haute teneur en amylose dérivé, préparé par traitement avec 3 à 6% d'anhydride octénylsuccinique, ou un amidon de maïs à haute teneur en amylose dérivé converti ayant une fluidité aqueuse au chlorure de calcium d'environ 40 ou moins, et préparé par traitement avec 1 à 3% d'anhydride octénylsuccinique, l'amidon ayant une teneur en amylose de 50 à 70% en poids et étant prégélatinisé par cuisson par jets ou par cuisson par jets et séchage par pulvérisation.

5. Produit selon la revendication 4, caractérisé en ce que le dérivé d'amidon contenant 50% d'amylose est préparé par traitement avec 6% d'anhydride octénylsuccinique, ou en ce que les dérivés convertis contenant 50% d'amylose ont une fluidité aqueuse au chlorure de calcium de 5 à 35 et sont préparés par traitement avec 3% d'anhydride octénylsuccinique, ou en ce que les dérivés convertis contiennent 70% d'amylose, une fluidité aqueuse de chlorure au calcium de 10 à 25 et sont préparés par traitement avec 1% d'anhydride octénylsuccinique.

6. Produit selon la revendication 5, caractérisé en ce que le rapport du caséinate de sodium au caséinate de calcium est 20—80:80—20.

7. Produit selon la revendication 1, caractérisé en ce que le caséinate est un mélange de caséinate de sodium et de caséinate de calcium et que 20 à 80% en poids du mélange de caséinates est remplacé par un amidon comestible à haute teneur en amylose prégélatinisé ayant une teneur en amylose d'au moins 40% en poids, et en ce que l'amidon à haute teneur en amylose est un amidon de fluidité préparé par conversion par acides ou par enzimes, un amidon oxydé préparé par traitement avec moins de 5,5% de chlore actif, ou une dextrine ayant une fluidité aqueuse au chlorure de calcium inférieure à environ 50.

8. Produit selon la revendication 7, caractérisé en ce que le rapport du caséinate de sodium au caséinate de calcium est 20—80:80—20 et en ce que l'amidon à haute teneur en amylose prégélatinisé est un amidon cuit par jets ou un amidon cuit par jets et séché par pulvérisation, et que l'autre amidon prégélatinisé est un amidon de maïs, de pomme de terre, de tapioca ou de maïs cireux, séché en tambour, cuit par jets ou cuit par jets et séché par pulvérisation.